(19) Europäisches Patentamt

European Patent Office

Office européen des brevets

(11) **EP 1 097 773 B1**

(12) **FASCICULE DE BREVET EUROPEEN**

(45) Date de publication et mention
de la délivrance du brevet:
**29.01.2003 Bulletin 2003/05**

(51) Int Cl.⁷: **B23H 1/02**, B23H 7/04

(21) Numéro de dépôt: **00122962.4**

(22) Date de dépôt: **23.10.2000**

(54) **Procédé et dispositif d'usinage par électroérosion**

Verfahren und Vorrichtung zur Funkenerosionsbearbeitung

Process and apparatus for electric discharge machining

(84) Etats contractants désignés:
**DE ES FR GB IT**

(30) Priorité: **05.11.1999 CH 202699**

(43) Date de publication de la demande:
**09.05.2001 Bulletin 2001/19**

(73) Titulaire: **CHARMILLES TECHNOLOGIES S.A.
1217 Meyrin 1 (CH)**

(72) Inventeur: **Balleys, Francois
1242 Satigny (CH)**

(74) Mandataire: **Micheli & Cie
Rue de Genève 122,
Case Postale 61
1226 Genève-Thonex (CH)**

(56) Documents cités:
**EP-A- 0 545 156        US-A- 4 447 696
US-A- 5 698 115**

- **PATENT ABSTRACTS OF JAPAN vol. 013, no.
055 (M-795), 8 février 1989 (1989-02-08) -& JP 63
260721 A (INOUE JAPAX RES INC), 27 octobre
1988 (1988-10-27)**
- **PATENT ABSTRACTS OF JAPAN vol. 016, no.
132 (M-1229), 3 avril 1992 (1992-04-03) -& JP 03
294116 A (MAKINO MILLING MACH CO LTD), 25
décembre 1991 (1991-12-25)**

Printed by Jouve, 75001 PARIS (FR)

## Description

La présente invention a pour objet un procédé et un dispositif d'usinage par électroérosion selon lequel on usine une pièce au moyen d'un outil séparés l'un de l'autre d'une distance d'usinage d'un espace de travail dans lequel se trouve un fluide d'usinage en appliquant une tension électrique entre l'outil et la pièce pour engendrer des décharges érosives.

Les procédés et dispositifs d'usinage par électroérosion utilisent comme outils des électrodes qui peuvent être des fils, des tubes ou des électrodes ayant une forme quelconque. L'électrode n'est pas en contact physique avec la pièce ; elle en est séparée par un fluide.

Certains utilisateurs de machines ont observé que la durée de vie des outils fabriqués par électroérosion peut être plus faible que celle des outils fabriqués par des méthodes mécaniques conventionnelles.

La cause de ce problème est un phénomène d'électrolyse qui endommage la surface des pièces usinées par électroérosion. L'électrolyse peut rendre les surfaces usinées moins dures et moins homogènes qu'avant leur usinage. Ceci est particulièrement le cas lorsque la pièce usinée est un matériau fritté.

L'électrolyse, qui a lieu pendant l'usinage, est un effet secondaire indésirable qui se produit sur toutes les machines utilisant de l'eau, ou tout autre liquide ou fluide dont la conductivité est trop élevée pour séparer l'électrode de la pièce.

Les effets de l'électrolyse sont proportionnels à la conductivité du liquide, c'est-à-dire à son contenu en porteurs de charges électriques (ions et électrons). C'est pourquoi, lorsque de l'eau est utilisée, elle doit être déionisée pour qu'elle contienne aussi peu d'ions que possible. Mais, la nature est telle que même l'eau très pure contient des ions en suspension.

Pour usiner une pièce par électroérosion, il est bien connu qu'il faut tout d'abord appliquer une tension entre l'électrode et la pièce. Il est également bien connu que la décharge de courant servant à usiner n'a pas lieu immédiatement après l'application de la tension, mais qu'il s'écoule un certain délai qui est appelé temps d'attente $t_D$ par l'homme du métier.

Pendant ce temps d'attente $t_D$, sous l'effet du champ électrique, les ions de polarité négative présents dans le liquide sont attirés par la pièce de polarité positive et la bombardent constamment.

Les ions réagissent ainsi chimiquement avec la pièce, formant des sels qui à leur tour vont en solution. En d'autres mots, le métal de la surface de la pièce subit des modifications métallurgiques.

Pour éviter ce phénomène indésirable d'électrolyse, on a utilisé des fluides qui ne contiennent que peu d'ions. Le fluide ne peut donc pas participer à un processus électrochimique. On a ainsi utilisé comme fluide diélectrique de l'huile minérale.

Toutefois, l'absence de particules chargées électriquement dans une huile n'est pas certaine surtout durant l'usinage où l'huile contient beaucoup de particules érodées créées par l'électroérosion ainsi que des molécules issues du cracking de l'huile provoqué par les décharges. Une telle contre-mesure ne peut donc qu'atténuer le problème de l'électrolyse.

De plus, dans le cas d'usinages avec des électrodes filaires, la solution consistant à utiliser des huiles comme diélectrique est une alternative dont l'inconvénient principal est une importante réduction des vitesses d'usinage.

Dans le cas d'usinage avec des électrodes massives, l'huile n'élimine pas le risque de voir les boues d'usinage chargées électriquement s'agglomérer et se coller définitivement à l'une des électrodes.

Il est également possible de maintenir la conductivité de l'eau à un niveau aussi bas que possible. Cette solution atténue seulement le problème car, on a vu qu'il n'est pas possible d'obtenir de l'eau ne contenant aucun ion.

On a aussi effectué certaines étapes de l'usinage, en particulier les passes de finition, en inversant la polarité appliquée entre l'électrode et la pièce. Dans ce cas, l'électrode a une charge électrique positive par rapport à la pièce. Ainsi, le phénomène électrochimique à éviter sur la pièce, se déroule sur l'électrode. L'inconvénient de cette approche est que les opérations de finition deviennent plus lentes, sans pour autant supprimer complètement le phénomène d'électrolyse.

On a également proposé dans les documents CH 536,166 et US 4.347,425 d'utiliser un générateur comprenant deux sources de tensions, de polarités opposées. Ces sources peuvent être enclenchées de manière telle que l'électrode et la pièce aient, durant le temps d'attente, une polarité opposée à celle qu'ils ont pendant l'établissement de la décharge principale de courant. Les effets dommageables de l'électrolyse peuvent ainsi être réduits. Mais ces générateurs ne permettent pas d'éviter que l'électrolyse se produise.

D'autres solutions pour lutter contre l'électrolyse consistent à enclencher des sources de tension, continues et appliquées par intermittence comme dans EP 0.545.156 ou alternatives et à haute fréquence comme dans US 4.447.696 ou US 5.698.115 pendant le temps de pause séparant deux décharges successives de courant entre l'électrode et la pièce. Ces solutions présentent l'inconvénient de ne pas supprimer l'électrolyse lorsqu'elle est particulièrement importante, c'est-à-dire pendant le temps d'attente $t_D$ lorsque la tension d'amorçage généralement élevée est appliquée.

La présente invention a pour but de remédier à ces inconvénients et de créer un procédé et un dispositif d'usinage par électroérosion permettant de supprimer les phénomènes d'électrolyse.

L'invention est caractérisée à cet effet par la succession suivante de phases lors d'une décharge érosive :

a) une phase d'attente pendant laquelle une tension alternative à une fréquence telle est appliquée entre l'outil et la pièce que des ions présents dans le fluide d'usinage effectuent des parcours oscillants sensiblement plus courts que ladite distance d'usinage séparant l'outil de la pièce et pendant laquelle un canal ionisé est créé entre l'outil et la pièce par l'effet de ladite tension alternative,

b) une phase d'étincelage débutant avec la détection d'un courant circulant entre l'outil et la pièce et pendant laquelle une source de tension continue forme et entretient un courant de décharge érosive et

c) une phase de pause pendant laquelle aucune tension n'est appliquée entre l'outil et la pièce de façon que le fluide d'usinage présent entre l'outil et la pièce se déionise et que le canal ionisé disparaisse;

et par le fait que l'on répète cette succession de phases pendant la durée d'usinage.

Ces caractéristiques permettent d'obtenir un procédé d'usinage sans phénomène d'électrolyse, avec un amorçage facilité des décharges et une efficacité d'usinage élevée, tout en évitant une détérioration de la pièce ou de l'outil, par exemple une rupture du fil, par un apport excessif de chaleur à un endroit donné de cet outil.

De préférence, le procédé est caractérisé par le fait que la fréquence de ladite tension alternative est d'au moins 100 kHz pour un espace de travail présentant une distance d'usinage de 30 à 40 microns, par le fait que cette fréquence est augmentée lorsque ladite distance est diminuée et par le fait que cette fréquence est de sensiblement 10 MHz pour une distance sensiblement égale à 1 micron.

Ainsi le parcours oscillant des ions est beaucoup plus petit que la distance d'usinage et tout bombardement de la pièce et de l'outil par les ions présents dans le liquide d'usinage peut être évité.

Selon une variante avantageuse, la fréquence de la tension alternative est variable pendant le temps d'attente.

De préférence, la fréquence de la tension alternative diminue progressivement à l'intérieur de la phase d'attente de façon à balayer un spectre de fréquences.

Ces caractéristiques permettent d'améliorer efficacement la production d'un canal ionisé et donc l'amorçage des décharges.

De façon avantageuse, on établit une tension alternative telle que la durée des impulsions négatives soit différente de celle des impulsions positives.

On pourra ainsi adapter la tension moyenne à travers le gap ou distance d'usinage de façon à garantir l'absence de tous phénomènes d'électrolyse, tout en optimalisant les conditions d'usinage.

Ces avantages pourront encore être renforcés par le fait que l'on établit une tension alternative telle que l'amplitude des impulsions négatives soit différente de celle des impulsions positives.

Selon une variante intéressante, on bloque la tension alternative sur la polarité aléatoire présente au moment de la détection d'un courant entre l'outil et la pièce.

Ces caractéristiques permettent d'éviter l'extinction d'une décharge amorcée du fait d'un changement de polarité pendant l'établissement de la décharge érosive.

Une autre variante du procédé est caractérisée par le fait que l'on bloque la tension alternative sur une polarité prédéterminée dès la détection d'un courant entre l'outil et la pièce et par le fait que ladite polarité prédéterminée est de préférence celle qui correspond à la polarité de la source de tension continue.

Ces caractéristiques permettent également de réduire le risque d'extinction tout en conservant des mesures contre les phénomènes d'électrolyse.

Une variante de procédé particulièrement favorable est caractérisée par le fait que la phase d'étincelage est subdivisée en un temps de retard correspondant à la durée d'enclenchement de la décharge principale par la source de tension continue et un temps de courant correspondant à la décharge érosive et par le fait que la durée dudit temps de retard est réglée de façon que l'on obtient pour chaque décharge érosive au moins une période complète de la tension alternative comportant une impulsion positive et une impulsion négative.

Ces caractéristiques permettent encore d'affiner de façon contrôlée et précise les mesures anti-électrolyse.

Ainsi, le temps de retard est réglé avantageusement de façon que

$$Tr \geq T - t_D$$

où

$T_R$ est la durée du temps de retard
$T$ est la période de la tension alternative, et
$T_D$ est la durée de la phase d'attente

La présente invention concerne également un dispositif pour la mise en oeuvre d'un procédé d'usinage par électroérosion selon lequel on usine une pièce au moyen d'un outil séparés l'une de l'autre d'une distance d'usinage d'un espace de travail dans lequel se trouve un fluide d'usinage en appliquant une tension électrique entre l'outil et la pièce, caractérisé par le fait qu'il comprend en combinaison

- une source de tension alternative agencée de façon à produire pendant une phase d'attente une tension alternative à une fréquence telle, entre l'outil et la pièce, que des ions présents dans le fluide d'usinage effectuent des parcours oscillants sensiblement plus courts que la distance d'usinage et qu'un canal ionisé est crée entre l'outil et la pièce,

- un capteur susceptible de détecter un courant entre l'outil et la pièce,
- une source de tension continue agencée de façon à former et entretenir un courant de décharge érosive pendant une phase d'étincelage débutant avec la détection d'un courant entre l'outil et l'électrode, et
- une unité de commande agencée de façon à enclencher lesdites sources de tension alternative et continue de façon à obtenir lors des décharges érosives une succession de phase comportant ladite phase d'attente, ladite phase d'étincelage et une phase de pause pendant laquelle aucune tension n'est appliquée entre l'outil et la pièce de façon que le fluide d'usinage entre l'outil et la pièce se déionise et que le canal ionisé disparaisse.

Le dispositif permet ainsi d'éliminer tous phénomènes d'électrolyse tout en permettant une efficacité d'usinage sans détérioration thermique de l'outil ou de la pièce.

Les caractéristiques conformément à la présente invention imposent que pendant la phase d'attente les ions ne se déplacent que très peu sous l'effet du champ électrique alternatif à haute fréquence. Les ions oscillent autour d'une position d'équilibre, mais la distance sur laquelle a lieu l'oscillation est très inférieure à la largeur de l'espace entre l'outil et la pièce. Ainsi, aucun bombardement ionique n'est possible. Par contre, la mobilité des électrons, plusieurs dizaines de milliers de fois plus légers que les ions les plus légers, est - telle qu'ils peuvent suivre ce champ électrique de haute fréquence et permettre ainsi l'amorçage. La phase de pause est nécessaire pour déioniser complètement le diélectrique du gap qui ne conserve alors aucune mémoire de la position du canal ionisé de la décharge précédente. On évite ainsi que deux ou plusieurs décharges éclatent successivement au même endroit et provoquent une détérioration de l'outil ou de la pièce, par exemple une rupture du fil, par un apport excessif de chaleur à cet endroit.

D'autres avantages ressortent des caractéristiques exprimées dans les revendications dépendantes et de la description exposant ci-après l'invention plus en détail à l'aide de dessins qui représentent schématiquement et à titre d'exemple un mode d'exécution du procédé et du dispositif et des variantes.

La figure 1 représente schématiquement l'espace entre l'électrode ou l'outil et la pièce et le mouvement des ions lors de la phase d'attente d'une décharge dans un procédé d'usinage connu et représenté aux figures 2A et 2B.

Les figures 2A et 2B représentent des diagrammes montrant la tension, respectivement le courant lors de décharges générées dans un procédé connu.

Les figures 3A et 3B représentent schématiquement l'espace entre l'électrode et la pièce et le mouvement des ions lors de la phase d'attente d'une décharge, respectivement lors de la décharge de courant dans un autre procédé d'usinage connu et représenté aux figures 4A et 4B.

Les figures 4A et 4B représentent des diagrammes montrant la tension, respectivement le courant lors de décharges érosives dans un autre procédé connu.

Les figures 5A et 5B représentent des diagrammes montrant la tension, respectivement le courant lors de décharges érosives produites selon un mode d'exécution du procédé de la présente invention.

Les figures 6A et 6B, 7A et 7B, 8A et 8B, 9A et 9B représentent des diagrammes montrant la tension respectivement le courant lors de décharges érosives produites selon quatre variantes du procédé de la présente invention.

Les figures 10A et 10B représentent schématiquement l'espace entre l'électrode et la pièce lors de la phase d'attente d'une décharge, respectivement lors de la décharge de courant en utilisant le procédé selon la présente invention.

Les figures 11 et 12 sont des schémas de circuits électriques/électroniques d'un mode d'exécution et d'une variante d'un dispositif pour la mise en oeuvre du procédé conformément à la présente invention.

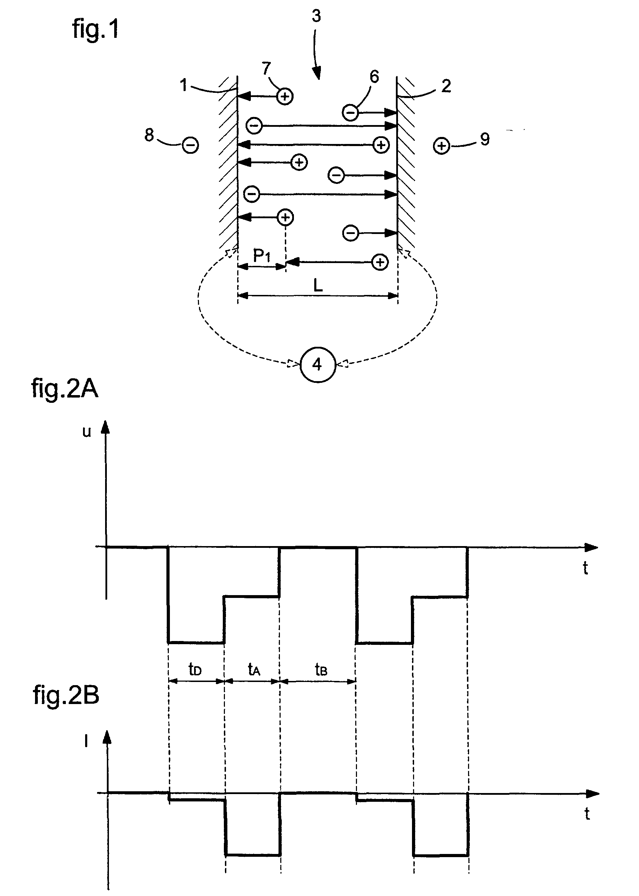

En référence à la figure 1, les dispositifs d'usinage par électroérosion connus comprennent généralement une électrode 1 servant d'outil et une pièce à usiner 2 au moins partiellement contenus dans un fluide ou liquide d'usinage 3. Une source de tension 4 permet d'appliquer par exemple au travers d'une résistance une tension entre l'électrode 1 et la pièce 2 après fermeture d'un interrupteur 5.

Les figures 2A et 2B montrent en correspondance avec la figure 1 et de façon connue la tension (figure 2A) et le courant (figure 2B) dans l'espace de travail d'une largeur L entre l'électrode et la pièce.

Il est bien connu que, pour qu'une décharge de courant érosif éclate entre l'électrode 1 et la pièce 2, il faut tout d'abord appliquer, à l'aide de la source de tension 4, une tension entre l'électrode 1 et la pièce 2. Le temps $t_D$ pendant lequel la tension est appliquée sans que pour autant il ne passe de courant entre l'électrode 1 et la pièce 2, sauf bien entendu le faible courant dû à la conductivité électrolytique du liquide d'usinage 3. Comme indiqué sur la figure 2A, cette phase est communément appelée temps d'attente $t_D$ par l'homme du métier. Pendant ce temps de durée aléatoire, la tension entre l'électrode 1 et la pièce 2 est celle indiquée sur la figure 2A alors qu'il ne circule que le courant ionique entre l'électrode 1 et la pièce 2, comme indiqué à la fig. 2B. Ce courant faible est de l'ordre de 0,1 à 1 A selon les régimes. Après que ce temps de durée variable se soit écoulé, il est également bien connu qu'une décharge de courant érosif éclate entre l'électrode 1 et la pièce 2. Le temps pendant lequel la décharge de courant érosif a lieu est indiqué par $t_A$ à la fig. 2A. Pendant ce temps, la valeur de la tension entre l'électrode 1 et la pièce 2 chute, comme indiqué à la fig.2A, alors que le courant s'établit entre l'électrode 1 et la pièce 2 comme par exemple indiqué à la fig. 2B. Il est également bien connu que pour éviter la formation, entre l'électrode 1 et la pièce 2, d'un arc électrique qui pourrait endommager la pièce 2, le passage du courant entre l'électrode 1 et la pièce 2 doit être interrompu pendant un temps $t_B$ de durée prédéterminée, comme indiqué sur la fig. 2A. Ceci est réalisé par des moyens bien connus, par exemple en utilisant un dispositif, non représenté, qui commande la fermeture et l'ouverture d'un ou plusieurs interrupteurs pour permettre ou stopper l'application de la tension entre l'électrode 1 et la pièce 2. La tension et le courant entre l'électrode 1 et la pièce 2 deviennent après leur ouverture nuls, comme indiqué aux figures 2A et 2B.

La figure 1 montre, selon l'état de la technique et en correspondance avec les figures 2A et 2B, le déplacement moyen P1 des ions, ayant une charge électrique négative 6 et ayant une charge électrique positive 7, pendant le temps d'attente $t_D$, dans l'espace de largeur L contenant le fluide diélectrique 3 séparant l'électrode 1 et la pièce 2. Pendant ce temps d'attente $t_D$, la source de tension 4 applique une tension telle que l'électrode 1 a une charge électrique négative 8 et la pièce 2 a une charge électrique positive 9. Il s'ensuit que les ions ayant une charge électrique positive 7 vont bombarder l'électrode 1 et les ions ayant une charge électrique négative 6 vont bombarder la pièce 2 et y provoquent le phénomène d'électrolyse qui endommage sa surface.

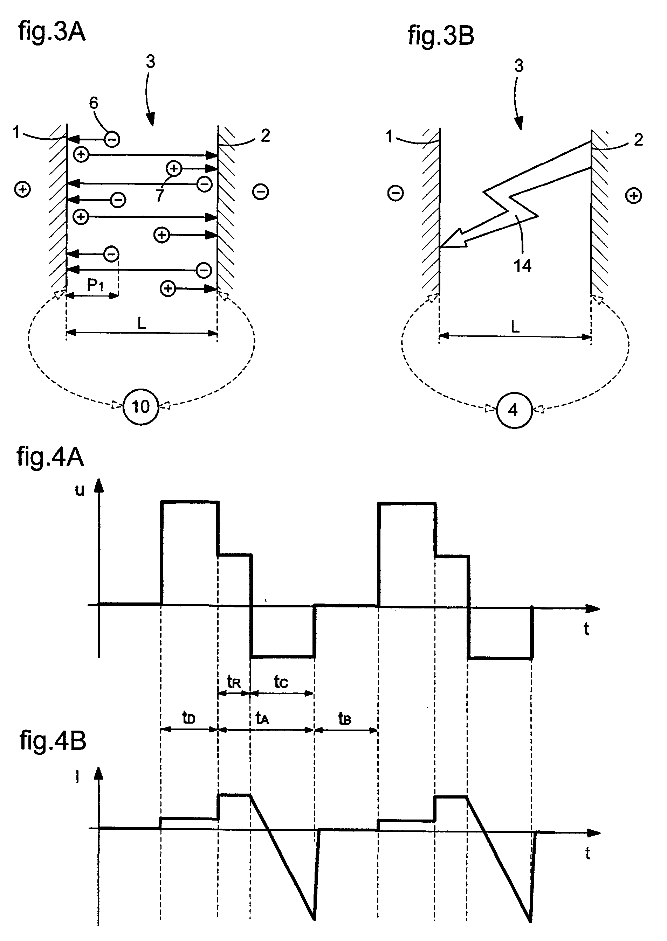

Les figures 3A et 3B en correspondance avec les figures 4A et 4B se réfèrent à d'autres dispositifs connus de l'état de la technique et qui ont pour but de diminuer les effets néfastes de l'électrolyse. Ces dispositifs comportent au moins deux sources de tension 4 et 10 de polarités opposées. Pendant le temps d'attente $t_D$, la source de tension 4 n'applique pas de tension à l'électrode 1 et la pièce 2. Pendant ce même temps d'attente $t_D$, la source de tension 10 applique à l'électrode 1 et à la pièce 2 une tension de polarité opposée à celle qui leur est appliquée par la source de tension 4 pendant le temps $t_A$ durant lequel la décharge principale de courant érosif a lieu. Une unité de commande permettant la commutation de la source de tension 10 à la source de tension 4 n'est pas reproduite dans le dessin pour rendre celui-ci plus clair. Ainsi, pendant le temps d'attente $t_D$, la tension entre l'électrode 1 et la pièce 2 est de polarité opposée à celle appliquée pendant la décharge, comme indiqué sur la fig. 4A, alors que seul un faible courant ionique circule entre l'électrode 1 et la pièce 2, comme indiqué à la fig. 4B. Après que ce temps $t_D$ se soit écoulé, il se forme un canal conducteur dans le fluide diélectrique 3 et un courant s'établit entre l'électrode 1 et la pièce 2, comme représenté à la fig.4B. Un dispositif de détection de ce courant non représenté car bien connu dans l'état de la technique, détecte l'accroissement soudain du courant entre l'électrode 1 et la pièce 2, et l'unité de commande, également bien connue dans l'état de la technique et non représentée, déclenche la source de tension 10 et enclenche la source de tension 4 pour générer la décharge principale de courant érosif. Ainsi, pendant le temps d'attente $t_D$, la tension entre l'électrode 1 et la pièce 2 est de polarité opposée à celle appliquée pendant la décharge principale, comme représenté aux fig. 4A et 4B.

Il est à noter que le temps d'attente to prend fin après une durée aléatoire dès que l'on détecte un accroissement de courant entre l'électrode 1 et la pièce 2. Simultanément un temps $t_A$ ou temps d'étincelage débute. Ce temps $t_A$ est subdivisé en un temps $t_R$ ou temps de retard ou de préparation et un temps $t_C$ ou temps de décharge proprement dit. Dès la détection d'un courant entre l'électrode et la pièce, donc au début du temps $t_R$ et $t_A$, la source de tension principale 4 est enclenchée. Il se passe cependant un retard d'enclenchement d'une durée déterminée par les circuits électroniques et électriques de la source 4 correspondant à ce temps de retard $t_R$, jusqu'à ce que la tension (figure 4A) et le courant (figure 4B) s'inversent. Au moment de l'inversion de la tension, le temps de retard $t_R$ prend fin et le temps de décharge $t_C$ débute, pendant lequel la décharge a lieu.

La figure 3A montre, selon l'état de la technique et en correspondance avec les figures 4A et 4B, le déplacement P1 des ions, ayant une charge électrique négative 6 et ayant une charge électrique positive 7, pendant le temps de durée $t_D$, dans l'espace de largeur L contenant le fluide diélectrique 3 séparant l'électrode 1 et la pièce 2. Pendant ce temps $t_D$, la source de tension 10 applique une tension telle que l'électrode 1 a une charge électrique positive et la pièce 2 a une charge électrique négative. Il s'ensuit que les ions ayant une charge électrique négative 6 ne vont plus bombarder la pièce 2, comme dans le cas de la fig. 2, mais vont bombarder l'électrode 1 et les ions ayant une charge électrique positive 7 ne vont plus bombarder l'électrode 1 mais vont bombarder la pièce 2 et y provoquent un phénomène d'électrolyse moins dommageable pour la pièce 2 que celui provoqué par les ions ayant une charge électrique négative, sans toutefois parvenir à éviter complètement le phénomène d'électrolyse.

La figure 3B montre, selon l'état de la technique et en correspondance avec les figures 4A et 4B, l'espace de largeur L contenant le fluide diélectrique 3 séparant l'électrode 1 et la pièce 2, pendant le temps $t_C$ au cours duquel a lieu la décharge principale de courant érosif 14. La source de tension 10 est déclenchée et la source de tension 4 est enclenchée, générant ainsi la décharge principale de courant érosif 14.

Les générateurs fonctionnant selon ce principe connu permettent de réduire quelque peu les phénomènes d'électrolyse; cependant ils ne permettent pas d'éviter totalement que l'électrolyse se produise, car les ions ne sont pas bloqués pendant le temps d'attente $t_D$.

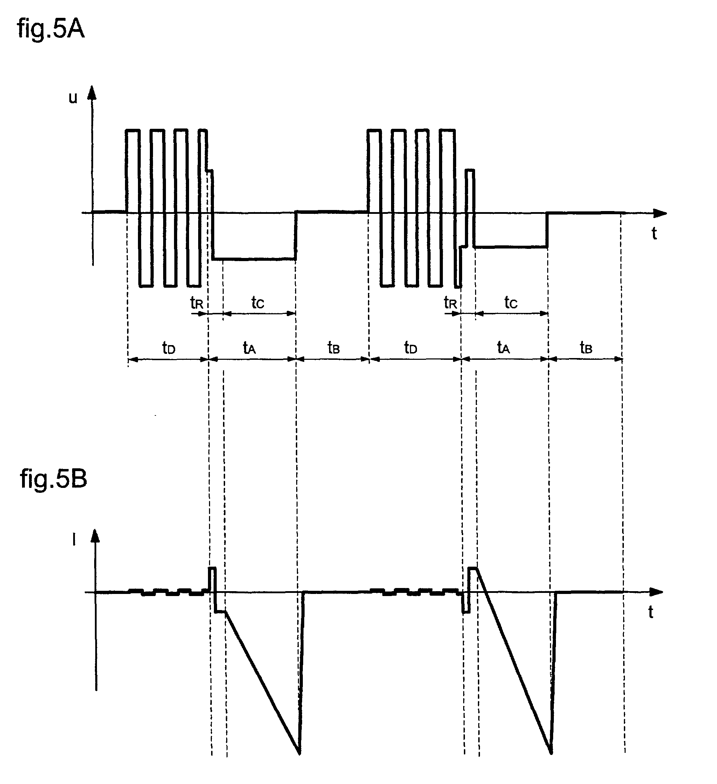

Conformément à un premier mode d'exécution du procédé selon l'invention illustrée aux figures 5A et 5B, on effectue la succession suivante de phases lors des décharges érosives :

Pendant une phase d'attente $t_D$, on applique une tension alternative entre l'électrode et la pièce grâce à une source de tension alternative. La fréquence de cette tension est fixée à une valeur telle que les ions présents dans le fluide effectuent des parcours oscillants aller-retour faibles, en tous cas sensiblement plus courts que la distance d'usinage L séparant l'électrode de la pièce. La fréquence pourra typiquement être choisie entre 0,1 et 10 MHz. Pendant cette phase d'attente $t_D$, aucun courant ionique ne transite dans l'espace de travail ou gap G entre l'électrode 1 et la pièce 2. Sous courant ionique, on entend un courant dû à des déplacements des ions allant de l'électrode à la pièce ou vice-versa. La tension entre l'électrode et la pièce change de polarité avec une fréquence qui est constante à la figure 5A. On remarque pendant cette phase un petit courant galvanique généralement inférieur à 0,5 A dû aux capacités réparties des électrodes pièce et outil qui se chargent et se déchargent, comme indiqué à la figure 5B.

Après une durée aléatoire dépendant des conditions physiques et chimiques du gap, qui pourrait être typiquement de 1 μsec avec des valeurs extrêmes vers 15 μsec, un canal conducteur se forme dans le fluide ou liquide diélectrique 3 et un courant commence à s'établir entre l'électrode et la pièce, tandis que la tension U d'amorçage diminue considérablement. Un dispositif de détection adéquat détecte un accroissement soudain du courant et enclenche une source de tension continue pour générer et entretenir la décharge principale de courant érosif pendant la prochaine phase, dite phase d'étincelage $t_A$. Cette dernière est en fait subdivisée en deux périodes distinctes, une première période $t_R$ pendant laquelle seulement un faible courant de l'ordre de 2 à 6 A circule entre l'électrode et la pièce et dont la polarité dépend encore de la polarité de la tension alternative de la source de tension alternative. Cette première période correspond à un temps de retard $t_R$ ou de préparation appartenant à la durée d'enclenchement de la décharge principale, temps pendant lequel le courant de la décharge principale prend naissance. La durée de ce temps de retard $t_R$ dépend des circuits électriques et électroniques du générateur de tension continue et est sensiblement constante pour chaque décharge érosive de l'usinage. Sa durée est typiquement de 0,2 à 0,8 μsec.

La seconde période $t_C$ de la phase d'étincelage $t_A$ correspond à un temps de courant pendant lequel la décharge érosive a lieu et est entretenue par la source de tension continue. La durée de cette phase d'étincelage $t_A$ est fixée de façon à obtenir une efficacité et une qualité optimales d'usinage. La durée de la phase d'étincelage pourra typiquement être de 2μsec, étant bien entendu que l'homme du métier fixera sa valeur selon des données expérimentales prédéterminées.

La fin de cette phase et le début de la phase de pause $t_B$ suivante est obtenue en coupant les sources de tension continue et alternative. Pendant la phase de pause $t_B$ aucune tension n'est appliquée entre l'électrode et la pièce de façon que le fluide ou liquide d'usinage présent entre l'électrode et la pièce se déionise et que le canal ionisé disparaisse entièrement. La conductivité du gap décroît très rapidement.

Au fait, le cycle de phases de chaque décharge commence par un temps ou une phase de pause $t_B$ durant laquelle cette déionisation a lieu. Ainsi, le gap ne conserve aucune mémoire de la position du canal ionisé de la décharge précédente. Cette phase de pause est absolument nécessaire car elle évite que deux décharges ou une suite de décharges éclatent successivement au même endroit et provoquent une rupture du fil par un apport excessif de chaleur sur cet endroit. Sa durée sera favorablement entre 1 et 20 μsec. Ainsi, chaque décharge est précédée d'un temps aléatoire, appelé phase ou temps d'attente $t_D$ durant laquelle un nouveau canal ionisé se crée et la conductivité du gap s'accroît progressivement et de plus en plus rapidement.

L'agencement décrit impose que pendant la phase d'attente $t_D$, les ions ne se déplacent que très peu sous l'effet du champ électrique alternatif haute fréquence. Ce même agencement permet d'amorcer les décharges dans une polarité aléatoire.

Les ions, à cause de la tension alternative à haute fréquence, oscillent autour d'une position d'équilibre; la distance sur laquelle a lieu l'oscillation est très inférieure à la largeur de l'espace entre l'électrode et la pièce. Ainsi, aucun bombardement ionique n'est possible.

Par contre, la mobilité des électrons est telle qu'ils peuvent suivre ce champ électrique de haute fréquence et permettent ainsi l'amorçage. En effet, les ions et les électrons sont soumis au même champ électrique, donc aux mêmes forces, mais les électrons sont plusieurs dizaines de milliers de fois plus légers que les ions les plus légers.

Il a été montré expérimentalement qu'une fréquence minimale d'application de la tension alternative de 100 kHz était nécessaire pour des distances entre le fil et la pièce de 30 à 40 microns pour que l'effet antiélectrolytique soit appréciable. Ces distances sont celles qu'on rencontre lors de l'ébauche d'une pièce par machine à fil.

Lorsque les distances entre le fil et la pièce deviennent plus faibles, il faut une fréquence plus élevée et lorsque les gaps ne sont plus que de quelques microns, comme c'est le cas en finition, une fréquence de 10 Mhz est nécessaire.

Il est également possible de tenir compte, lors du choix de la fréquence de la tension alternative, de la nature des ions contenus dans le fluide diélectrique pour lesquels les parcours oscillants doivent être contrôlés. Ainsi des ions à poids moléculaire faible et/ou à charge électrique élevée nécessiteront une fréquence sensiblement plus élevée que des ions à poids moléculaire élevé et/ou à charge électrique faible.

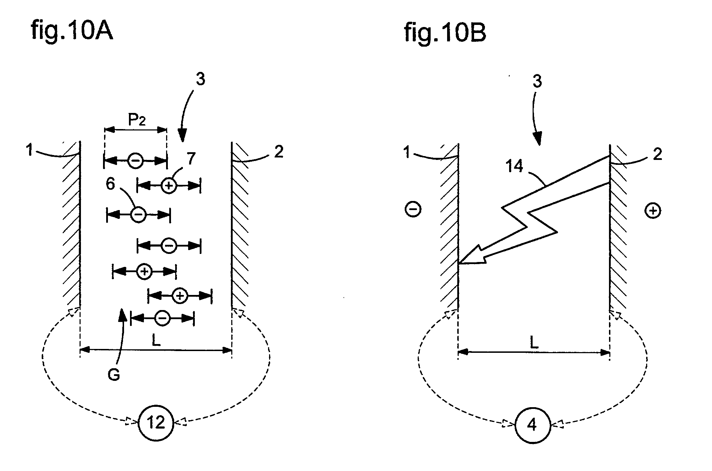

La figure 10A montre, selon l'invention et en correspondance avec les figures 5A et 5B, le déplacement moyen P2 des ions, ayant une charge électrique négative 6 et ayant une charge électrique positive 7, pendant la phase d'attente $t_D$, dans l'espace de travail G de largeur L contenant le fluide diélectrique 3 séparant l'électrode 1 et la pièce 2. Pendant cette phase d'attente $t_D$, une source de tension alternative 12 applique une tension de polarité alternative et à haute fréquence telle que la charge électrique de l'électrode 1 soit successivement positive et négative avec une haute fréquence et que la charge électrique de la pièce 2 soit successivement négative et positive avec une haute fréquence. Il s'en suit qu'aussi bien les ions ayant une charge électrique positive 7 que les ions ayant une charge électrique négative 6 oscillent autour d'une position d'équilibre avec une distance moyenne parcourue P2 inférieure à la largeur L de l'espace séparant l'électrode 1 de la pièce. Ainsi, aussi bien les ions ayant une charge électrique positive 7 que les ions ayant une charge électrique négative 6 ne vont plus bombarder ni la pièce 2 ni l'électrode 1. Le phénomène d'électrolyse est ainsi complètement éliminé.

La figure 10B montre l'espace de travail G contenant le fluide diélectrique 3 séparant l'électrode 1 et la pièce 2, pendant la phase de décharge $t_C$ au cours de laquelle a lieu la décharge principale 14 de courant érosif sous l'effet d'une source de tension continue 4 enclenchée.

Les circuits électriques/électroniques reliant ces sources 12 et 4 à l'électrode et à la pièce ne sont pas illustrés, mais pourront comprendre pour la source de tension alternative 12 un limitateur de courant et pour la source de tension continue des transistors interrupteurs.

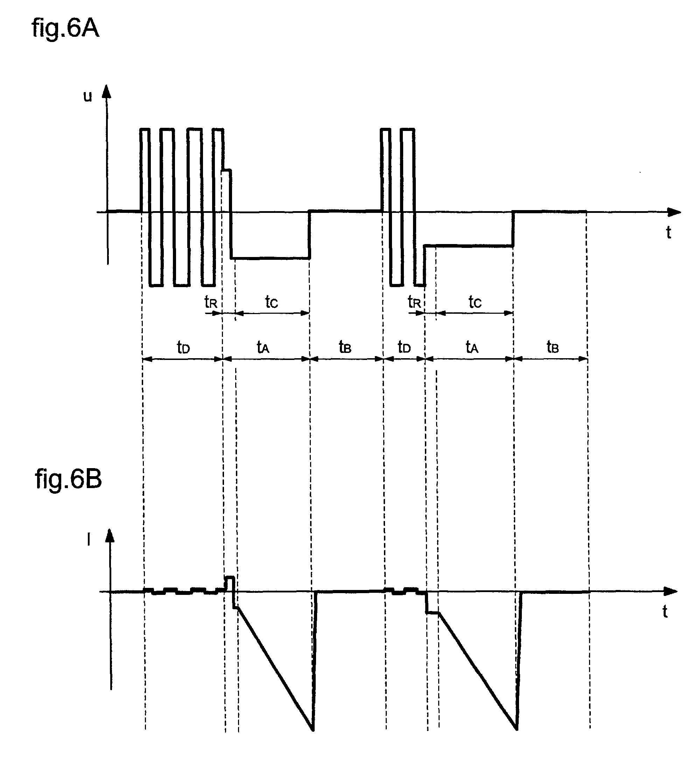

Dans une variante du procédé selon l'invention illustrée aux figures 6A et 6B montrant la tension U et le courant I entre l'électrode et la pièce, la fréquence de la source de tension alternative 12 n'est pas constante, mais cette fréquence est variable et diminue graduellement avec le temps t. On effectue donc un balayage du spectre des fréquences de la tension alternative pour rechercher la fréquence la plus apte à former un canal ionisé et un courant à travers le gap G. Ce spectre de fréquences pourrait également être modulé de façon à augmenter et diminuer successivement. Bien entendu les phases suivantes d'étincelage $t_A$, de retard $t_R$, de décharge $t_C$ et de pause $t_B$ restent inchangées. Cette variante est particulièrement bien adaptée à des conditions d'usinage à amorçage difficile.

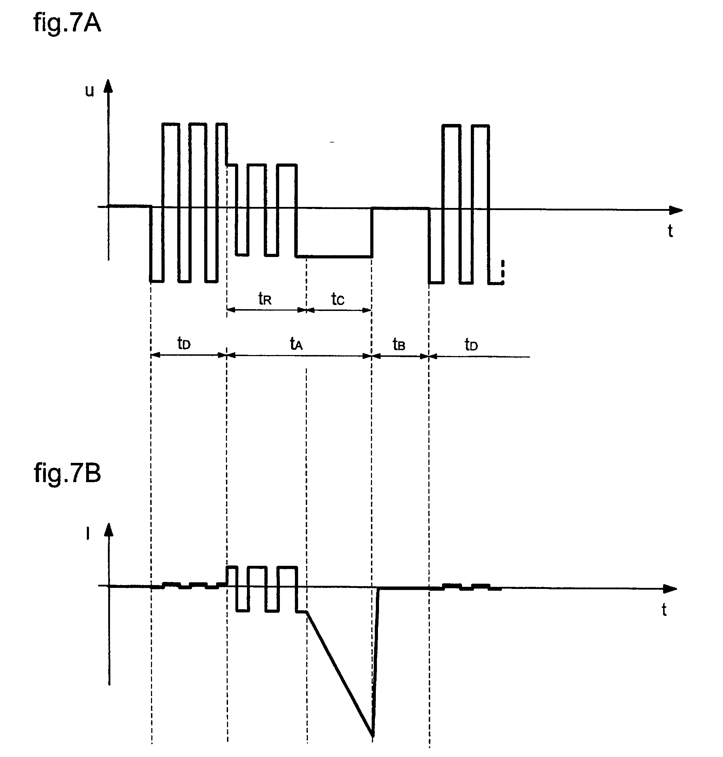

Selon une seconde variante du procédé représentée aux figures 7A et 7B illustrant la tension U et le courant I entre l'électrode et la pièce, la fréquence de la source de tension alternative 12 est modulée en largeur d'impulsions selon un procédé dit PWM (pulse width modulation). Ainsi la durée des impulsions négatives est différente, par exemple plus faible, de celle des impulsions positives, de façon qu'une certaine polarisation positive ou négative puisse être obtenue à travers le gap pendant la phase d'attente $t_D$.

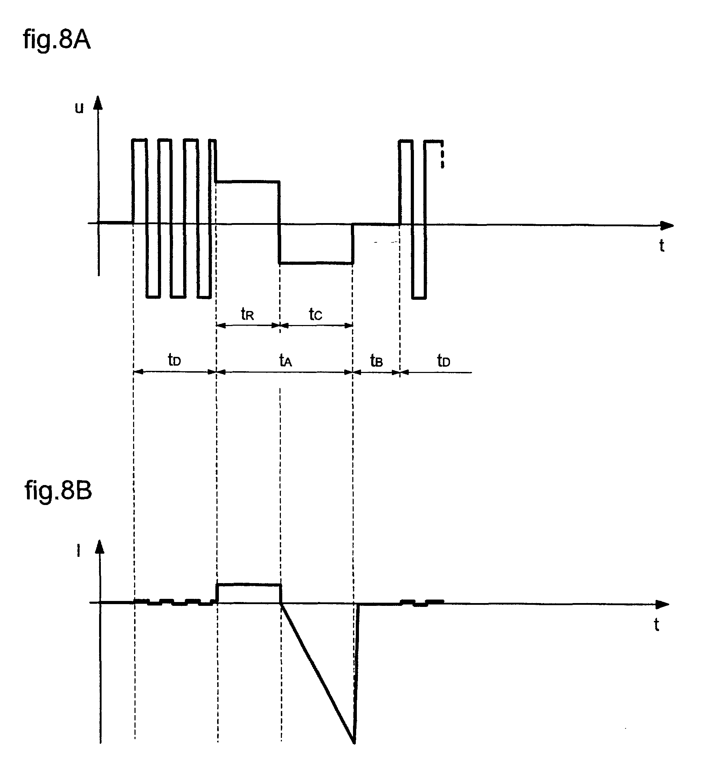

Une troisième variante du procédé d'usinage est montrée aux figures 8A et 8B illustrant la tension et le courant entre l'électrode et la pièce pendant les différentes phases du procédé. Ainsi, dès qu'un courant est détecté, la tension alternative est arrêtée et la tension est bloquée, dès le début de la phase de retard $t_R$, sur la polarité positive ou négative. Ainsi, cette polarité pourrait être aléatoire et correspondre à celle présente lors de l'apparition et de la détection du courant entre l'électrode et la pièce. Cette polarité pourrait également être prédéterminée et correspondre toujours à une même polarité.

Dans cette troisième variante, un arrêt immédiat de la tension alternative sur la polarité aléatoire présente lors de l'apparition d'un courant, donc dès le début de la phase de retard $t_R$, permet de lutter contre l'extinction de l'amorçage qui pourrait se produire lors d'un changement de polarité.

Si au contraire on désire éviter absolument tout phénomène d'électrolyse, on arrêtera l'alternance de la tension toujours sur la même polarité, par exemple la polarité positive si la tension de la source continue responsable de la décharge érosive est négative. Il existe pour cette variante cependant un faible risque que l'étincelle ne s'éteigne lors du changement de polarité.

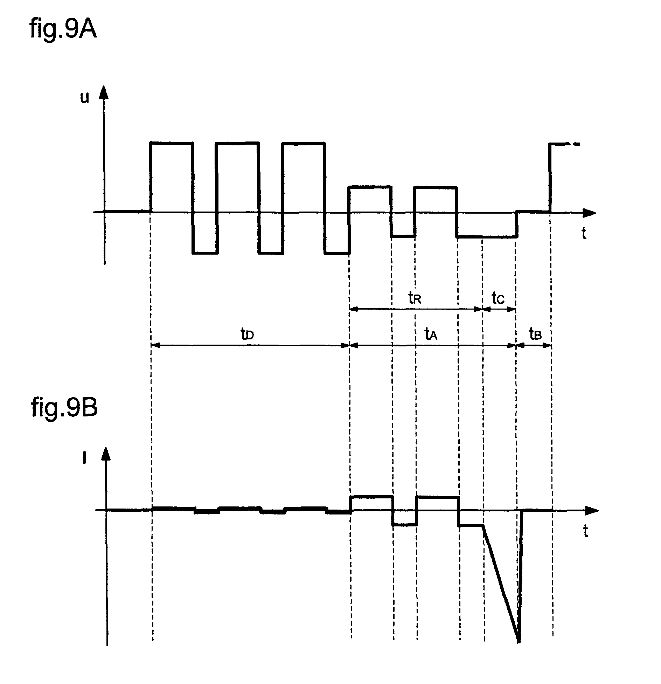

Une quatrième variante du procédé est illustrée aux figures 9A et 9B montrant la tension et le courant à travers le gap en fonction du temps. Dans cette variante, on applique également une tension alternative entre l'électrode et la pièce pendant le temps d'attente $t_D$ et le temps d'étincelage $t_A$. Cependant, dans cette variante aussi bien l'amplitude que la durée des impulsions positives sont différentes des impulsions négatives. Ces impulsions positives et négatives pourront en outre être modulées selon un rapport cyclique déterminé.

Pendant la phase d'attente $t_D$, les impulsions positives de tension U possèdent une amplitude différente, par exemple plus grande, que celle des impulsions négatives, alors qu'il ne circule aucun courant I à travers le gap, sauf un faible courant dû à la conductivité électrolytique du liquide d'usinage.

Après la phase d'attente $t_D$ de durée aléatoire, il se forme un canal conducteur dans le fluide diélectrique et un courant de décharge soudain s'établit entre l'outil électrode et la pièce, comme représenté à la figure 9B. Un dispositif de détection de ce courant de décharge détecte le passage du courant entre l'électrode 1 et la pièce 2, et un autre dispositif enclenche la source de tension continue pour générer la décharge principale de courant érosif qui s'établit après une phase de retard $t_R$.

Aussi bien dans la seconde que la quatrième variante (fig. 7A et 9A) la tension alternative à haute fréquence pourra être fixée de manière telle que la tension moyenne pendant une décharge est soit nulle, soit positive ou négative.

On remarque pour tous les procédés d'usinage décrits ci-dessus que la valeur de la tension U diminue dès l'apparition du courant I au début de la phase d'étincelage $t_A$ et de retard $t_R$. Dès la fin de la phase de retard $t_R$, la tension U et le courant I prennent la polarité de la source de tension continue 4 et on observe un fort accroissement du courant I pendant la phase de décharge $t_C$, tandis que l'amplitude de la tension U reste sensiblement la même que celle pendant la phase de retard $t_R$ précédente.

Les valeurs pour la tension U entre l'électrode et la pièce pendant les différentes phases pourront typiquement être de $\pm 50$ à $\pm 200$ V pendant la phase d'attente $t_D$, de 20 à 30 V pendant la phase d'étincelage $t_A$ et de 0 V pendant la phase de pause.

Le courant I circulant entre l'électrode et la pièce pourra typiquement avoir des valeurs de 2 à 6 A pendant la phase de retard $t_R$ et des courants crêtes de 500 A jusqu'à 800 A pendant la phase de décharge $t_C$. Lors de cette dernière, les courants ont une forme triangulaire à cause de la self de ligne non négligeable. La phase de croissance du courant est de l'ordre de la microseconde.

La source de tension continue 4 est agencée de façon à pouvoir fournir une puissance instantanée d'environ 1 à 1,5 KW et une tension jusqu'à 300V à vide, c'est-à-dire lorsqu'elle ne débite pas.

Selon une autre variante, on pourra introduire une durée prédéterminée entre la détection du courant entre l'électrode et la pièce marquant la fin de la phase d'attente $t_D$ et l'enclenchement de la source de tension continue. On aura donc comme auparavant une phase d'attente $t_D$, une phase de retard $t_R$, une phase de décharge $t_C$ et une phase de pause $t_B$. Mais une période de retard supplémentaire $t'_R$ sera intercalée entre la phase d'attente $t_D$ et la phase de retard $t_R$.

Selon une autre variante très avantageuse de l'invention, la durée du temps de retard $t_R$ de la source de tension principale est fixée de façon que l'on obtient pour chaque décharge au moins une période et un cycle complets de la tension alternative comportant au moins une impulsion positive et une impulsion négative avant que la tension de la source principale ne soit appliquée. En effet, lorsque les conditions d'amorçage sont très favorables, la durée $t_D$ du temps d'attente de l'amorçage peut devenir très courte. La tension alternative n'est alors appliquée pendant une durée très courte avant la décharge principale pour une succession de décharges, de façon que toutes les décharges soient amorcées uniquement sur une seule polarité par exemple positive. De ce fait, une électrolyse peut se produire lors de cette succession d'amorçages rapides. Au contraire, lorsque la tension alternative présente toujours une alternance positive et négative, il n'y a pas de migration ionique unilatérale.

Etant donné que le temps d'attente $t_D$ est aléatoire, on peut alors agir sur le temps de retard $t_R$ qui dépend de la source de tension principale en fixant $t_R$ de façon que

$$t_R \geq T - t_D$$

où T est la période de la tension alternative de la source de tension alternative. Si la durée $t_D$ de la phase d'attente est très courte, on pourra fixer la durée du temps de retard $t_R$ égale ou supérieure à une période T de la tension alternative.

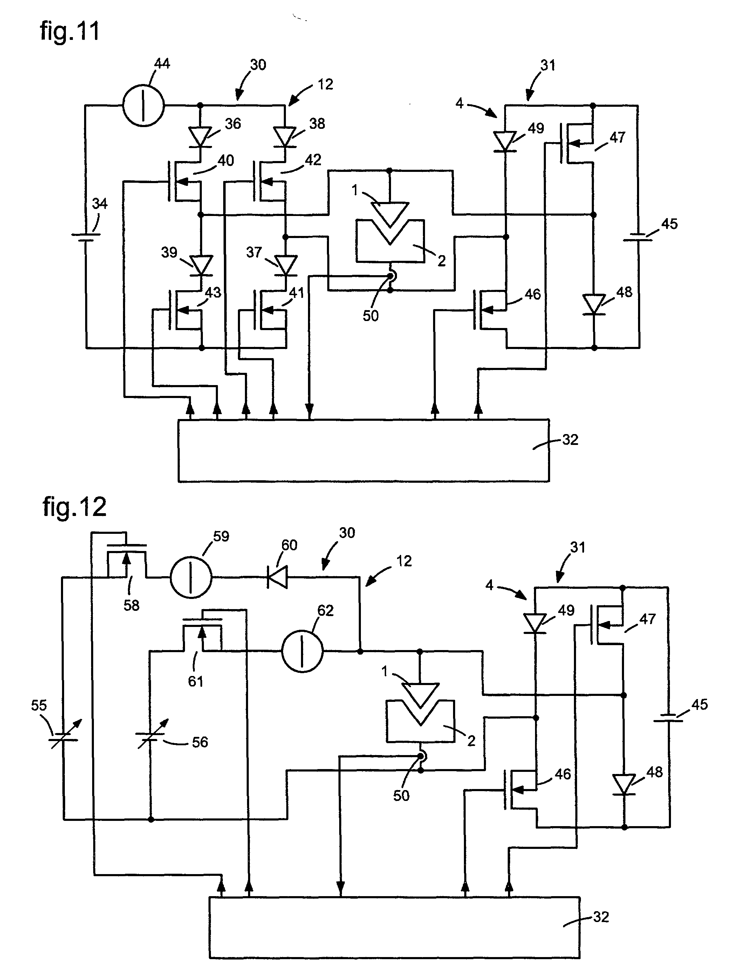

Un mode d'exécution d'un dispositif pour la mise en oeuvre des procédés d'usinage représentés aux figures 5 à 8 est illustré à la figure 11. Ce dispositif comprend un circuit électrique/électronique avec deux branches principales 30, 31 connectées chacune entre l'électrode 1 et la pièce à usiner 2. Une première branche 30 sert de générateur de tension alternative 12 et la seconde branche 31 de générateur de tension continue 4. L'ensemble du circuit est contrôlé par une unité de commande 32.

La première branche 30 comprend une source de tension 34 susceptible de fournir une tension comprise par exemple entre 50 et 200 V pour une puissance de l'ordre de 300 W.

La borne positive de cette source de tension 34 est connectée à l'électrode 1 par une diode 36 et un interrupteur 40 et à la pièce 2 par une diode 38 et un interrupteur 42. La borne négative de cette source 34 est reliée à l'électrode 1 par un interrupteur 43 et une diode 39 et à la pièce par un interrupteur 41 et une diode 37. L'ouverture et la fermeture des interrupteurs 40 à 43, constitués favorablement par des transistors à effet de champ, sont contrôlées et commandées par l'unité de commande 32. La première branche 30 comporte en outre un limitateur de courant 44 qui pourrait être intégré dans la source de tension 34. Un capteur de courant 50 permet de mesurer le courant I entre l'électrode 1 et la pièce 2 et de transmettre le résultat des mesures à l'unité de commande 32. Cette dernière est agencée de façon à fermer les transistors 40 et 41 pour appliquer une tension de polarité positive entre l'électrode 1 et la pièce 2, les transistors 42 et 43 étant ouverts, et ensuite à fermer les transistors 42 et 43 pour appliquer une tension de polarité négative entre l'électrode 1 et la pièce, les transistors 40 et 41 étant ouverts.

Cette suite d'opérations est répétée avec une fréquence constante, variable ou modulée, telle qu'expliquée en référence aux figures 5A à 8A.

La seconde branche 31 comprend une source de tension continue 45 d'une tension de 200 à 300 V à vide, à savoir lorsqu'elle ne débite pas, et d'une puissance instantanée d'environ 1 à 1,5 kW. La borne positive de cette source est connectée à la pièce 2 par un interrupteur 46 et sa borne négative est reliée à l'électrode 1 par un interrupteur 47. Cette branche 31 comprend en outre une diode 48 reliant la jonction entre la sortie de l'interrupteur 47 et l'électrode 1 à l'entrée de l'interrupteur 46 et une diode 49 reliant l'entrée de l'interrupteur 47 à la jonction entre la sortie de l'interrupteur 46 et la pièce 2. Les interrupteurs 46 et 47 sont de préférence des transistors dont l'ouverture et la fermeture sont contrôlées par l'unité de commande 32. Comme on a vu précédemment, le générateur de tension continue 4 est enclenché après la détection d'un courant par le capteur 50, marquant la fin de la phase d'attente $t_D$. L'unité de commande 32 commande à cet effet la fermeture des interrupteurs 46, 47. Cette fermeture peut être commandée immédiatement après la détection du courant ou après une période de temps de retard prédéterminée $t'_R$.

A la fin de la phase d'étincelage $t_A$, l'unité de commande 32 commande l'ouverture des interrupteurs 46, 47 pour déclencher le générateur de tension continue 4 et également l'ouverture de tous les interrupteurs 40 à 43 de la première branche 30, si ces interrupteurs n'ont pas déjà été ouverts auparavant. La décharge érosive est alors coupée et on entre dans la phase de pause $t_B$ pendant laquelle aucune tension n'est appliquée entre l'électrode et la pièce jusqu'à ce qu'une déionisation complète du gap soit obtenue. Le prochain cycle peut alors démarrer par la phase d'attente $t_D$ en appliquant la tension alternative commandée par l'unité de commande 32 selon les procédés décrits en référence aux figures 5 à 8.

Une variante du dispositif décrit précédemment est illustrée à la figure 12 et comprend une seconde branche 31 avec un générateur de tension continue 4 similaire. Les éléments similaires portent donc les mêmes chiffres de référence. La première branche 30 comportant le générateur de tension alternative 12 est d'un autre type et comporte deux sources de tension 55, 56 de polarité inversée et dont les tensions sont réglables. Une première source 55 est branchée entre l'électrode 1 et la pièce 2 en reliant sa borne négative à l'électrode 1 par l'intermédiaire d'un interrupteur 58, d'un limitateur de courant 59 et d'une diode 60. La seconde source 56 est également branchée en parallèle entre l'électrode 1 et la pièce 2 en reliant sa borne positive à l'électrode 1 par l'intermédiaire d'un interrupteur 61 et d'un limitateur de courant 62. L'unité de commande 32 peut ainsi ouvrir et fermer alternativement les interrupteurs 58 et 61 pour rendre actives les sources de tension 55 ou 56 dont les tensions sont de préférence différentes. On peut donc obtenir avec cette variante d'exécution une tension alternative telle qu'illustrée à la figure 9A et comportant des alternances de tension positives et négatives d'amplitude et de durée différentes. La succession des différentes phases $t_D$, $t_A$, $t_B$ lors de chaque décharge reste cependant la même.

Les valeurs pour les tensions des sources 55, 56 et 45 pourront typiquement être de 80, 100 et 300 V.

Il est bien entendu que les modes de réalisation décrits ci-dessus ne présentent aucun caractère limitatif et qu'ils peuvent recevoir toutes modifications désirables à l'intérieur du cadre défini par les revendications indépendantes. En particulier, les circuits électroniques pour générer les tensions alternatives et continues pourront être de toute autre nature. De ce fait, les diagrammes de courant I en fonction du temps pourront présenter des montées et descentes du courant pendant la phase de courant $t_c$ très différentes. La source de tension alternative pourra être coupée à tout moment après l'amorçage de la décharge principale, à savoir au début du temps de courant $t_c$, et jusqu'à la fin de ce dernier. Le dispositif pourra comprendre tous moyens pour régler et fixer le temps de retard $t_r$ à l'enclenchement de la décharge principale.

## Revendications

1. Procédé d'usinage par électroérosion selon lequel on usine une pièce au moyen d'un outil (1) séparés l'un de l'autre par une distance d'usinage (L) d'un espace de travail (G) dans lequel se trouve un fluide d'usinage en appliquant une tension électrique entre l'outil et la pièce pour engendrer des décharges érosives, **caractérisé par** la succession suivant de phases lors d'une décharge érosive :

   a) une phase d'attente ($t_D$) pendant laquelle une tension alternative est appliquée entre l'outil (1) et la pièce (2) à une fréquence telle que les ions présents dans le fluide d'usinage (3) effectuent des parcours oscillants (P2) sensiblement plus courts que ladite distance d'usinage (L) séparant l'outil de la pièce et pendant laquelle un canal ionisé est créé entre l'outil et la pièce par l'effet de ladite tension alternative,
   b) une phase d'étincelage ($t_A$) débutant avec la détection d'un courant circulant entre l'outil et la pièce et pendant laquelle une source de tension continue (4) forme et entretient un courant de décharge érosive (14) et
   c) une phase de pause ($t_B$) pendant laquelle aucune tension n'est appliquée entre l'outil (1) et la pièce (2) de façon que le fluide d'usinage (3) présent entre l'outil et la pièce se déionise et que le canal ionisé disparaisse;

   et par le fait que l'on répète cette succession de phases pendant la durée d'usinage.

2. Procédé selon la revendication 1, **caractérisé par le fait que** la fréquence de ladite tension alternative est d'au moins 100 kHz pour un espace de travail (G) présentant une distance d'usinage (L) de 20 à 40 microns; **par le fait que** cette fréquence est augmentée lorsque ladite distance est diminuée et **par le fait que** cette fréquence est de sensiblement 10 MHz pour une distance sensiblement égale à 1 micron.

3. Procédé selon la revendication 1, **caractérisé par le fait que** la fréquence de la tension alternative est variable pendant le temps d'attente ($t_D$).

4. Procédé selon la revendication 1, **caractérisé par le fait que** la fréquence de la tension alternative est fixée en fonction des ions contenus dans le fluide d'usinage (3) pour lesquels les parcours oscillants doivent être contrôlés.

5. Procédé selon la revendication 3, **caractérisé par le fait que** la fréquence de la tension alternative diminue progressivement à l'intérieur de la phase d'attente ($t_D$) de façon à balayer un spectre de fréquences.

6. Procédé selon la revendication 1, **caractérisé par le fait que** l'on établit une tension alternative telle que la durée des impulsions négatives soit différente de celle des impulsions positives.

7. Procédé selon la revendication 1 ou 6, **caractérisé par le fait que** l'on établit une tension alternative telle que l'amplitude des impulsions négatives soit différente de celle des impulsions positives.

8. Procédé selon la revendication 6 ou 7, **caractérisé par le fait que** l'on établit une tension alternative telle que la tension moyenne des décharges soit nulle, ou positive ou négative.

9. Procédé selon l'une des revendications précédentes, **caractérisé par le fait que** l'on bloque la tension alternative sur la polarité aléatoire présente au moment de la détection d'un courant entre l'outil (1) et la pièce (2).

10. Procédé selon l'une des revendications 1 à 8, **caractérisé par le fait que** l'on bloque la tension alternative sur une polarité prédéterminée dès la détection d'un courant entre l'outil (1) et la pièce (2) et **par le fait que** ladite polarité prédéterminée est de préférence celle qui correspond à la polarité de la source de tension continue (4).

11. Procédé selon la revendication 1, **caractérisé par le fait que** la phase d'étincelage ($t_A$) est subdivisée en un temps de retard ($t_R$) correspondant à la durée d'enclenchement de la décharge principale par la source de tension continue et un temps de courant ($t_C$) correspondant à la décharge érosive et **par le fait que** la durée dudit temps de retard ($t_R$) est réglée de façon que l'on obtient pour chaque décharge érosive au moins une période complète de la tension alternative comportant une impulsion positive et une impulsion négative.

12. Procédé selon la revendication 11, **caractérisé par le fait que** le temps de retard ($t_R$) est réglé de façon que

$$t_R \geq T - t_D$$

où

    $t_R$ est la durée du temps de retard,
    T est la période de la tension alternative, et
    $t_D$ est la durée de la phase d'attente.

13. Procédé selon la revendication 11 ou 12, **caractérisé par le fait que** le temps de retard ($t_R$) est réglé de façon à être égal ou supérieur à une période (T) de la tension alternative.

14. Procédé selon la revendication 1, **caractérisé par le fait que** l'on introduit une période de retard prédéterminée ($t'_R$) entre la phase d'attente ($t_D$) et la phase d'étincelage ($t_A$) en intercalant une durée d'attente prédéterminée entre la détection d'un courant entre l'outil (1) et la pièce (2) et l'enclenchement de la source de tension continue (4).

15. Dispositif pour la mise en oeuvre d'un procédé d'usinage par électroérosion selon lequel on usine une pièce (2) au moyen d'un outil (1) séparés l'un de l'autre par une distance d'usinage (L) d'un espace de travail (G) dans lequel se trouve un fluide d'usinage (3) en appliquant une tension électrique entre l'outil et la pièce, **caractérisé par le fait qu'**il comprend en combinaison

- une source de tension alternative agencée de façon à produire pendant une phase d'attente ($t_D$) une tension alternative entre l'outil (1) et la pièce (2) à une fréquence telle que des ions (6,7) présents dans le fluide d'usinage (3) effectuent des parcours oscillants (P2) sensiblement plus courts que la distance d'usinage (L) et qu'un canal ionisé est crée entre l'outil et la pièce,
- un capteur susceptible de détecter un courant entre l'outil et la pièce,
- une source de tension continue (4) agencée de façon à former et entretenir un courant de décharge érosive pendant une phase d'étincelage ($t_A$) débutant avec la détection d'un courant entre l'outil et la pièce, et
- une unité de commande (32) agencée de façon à enclencher lesdites sources de tension alternative et continue de façon à obtenir lors des décharges érosives une succession de phases comportant ladite phase d'attente ($t_D$), ladite phase d'étincelage ($t_A$) et une phase de pause ($t_B$) pendant laquelle aucune tension n'est appliquée entre l'outil et la pièce de façon que le fluide d'usinage (3) entre l'outil (1) et la pièce (2) se déionise et que le canal ionisé disparaisse.

16. Dispositif selon la revendication 15, **caractérisé par le fait qu'**il comprend une première branche (30) et une seconde branche (31) connectées en parallèle entre l'outil (1) et la pièce (2), la première branche (30) servant de générateur de tension alternative (12) et la seconde branche servant de générateur de tension continue (4) et comportant une source de tension continue (45) dont les bornes sont reliées à l'outil (1), respectivement à la pièce (2) par l'intermédiaire d'au moins un interrupteur (46,47) et d'au moins une diode (48,49).

17. Dispositif selon la revendication 16, **caractérisé par le fait que** la première branche (30) comprend une source de tension (34) dont une première borne est connectée à l'outil (1) par l'intermédiaire d'une première diode (36) et d'un premier interrupteur (40) et à la pièce (2) par l'intermédiaire d'une seconde diode (38) et d'un second interrupteur (42) et dont une seconde borne est connectée à l'outil (1) par l'intermédiaire d'un troisième interrupteur (43) et d'une troisième diode (39) et à la pièce (2) par l'intermédiaire d'un quatrième interrupteur (41) et d'une quatrième diode (37), l'unité de commande (32) étant agencée de façon à fermer et ouvrir les premier (40) et quatrième (41) interrupteurs et à ouvrir et fermer ensuite les deuxièmes (42) et troisième (43) interrupteurs pour obtenir ladite tension alternative.

18. Dispositif selon la revendication 16, **caractérisé par le fait que** la première branche (30) comporte, connectées en parallèle entre l'outil (1) et la pièce (2), deux sources de tension continue (55,56) de polarités inverses et dont les tensions sont réglables, la borne négative d'une première source (55) étant reliée à l'outil (1) par l'intermédiaire d'un premier interrupteur (58) et d'une diode (60), la borne positive de la seconde source (56) étant connectée à l'outil (1) par l'intermédiaire d'un second interrupteur (61), l'unité de commande (21) étant agencée de façon à ouvrir et fermer alternativement lesdits interrupteurs (58,61).

19. Dispositif selon la revendication 15, **caractérisé par le fait qu'**il est agencé à enclencher le courant de décharge érosive avec un temps de retard ($t_R$) prédéterminé de façon que l'on obtient pour chaque décharge érosive au moins l'application d'une période complète de la tension alternative.

20. Dispositif selon la revendication 19, **caractérisé par le fait qu'**il est agencé de façon que

$$t_R \geq T - t_D$$

où

$t_R$ est la durée du temps de retard,
T est la période de la tension alternative, et
$t_D$ est la durée de la phase d'attente,

de préférence

$$t_R \geq T.$$

**Patentansprüche**

1. Verfahren der Funkenerosionsbearbeitung, bei dem ein Werkstück mittels eines Werkzeuges (1) bearbeitet wird, die voneinander durch einen Bearbeitungsabstand (L) eines mit einem Bearbeitungsfluid gefüllten Arbeitsvolumens (G) getrennt sind, indem eine elektrische Spannung zwischen Werkzeug und Werkstück angelegt wird, um erosive Entladungen hervorzurufen, **gekennzeichnet durch** die nachstehende Folge von Phasen während einer erosiven Entladung:

a) eine Wartephase ($t_D$), während der zwischen Werkzeug (1) und Werkstück (2) eine Wechselspannung einer solchen Frequenz angelegt wird, dass die in dem Bearbeitungsfluid (3) vorhandenen Ionen oszillierende Strecken (P2) durchlaufen, die merklich kürzer als der benannte Bearbeitungsabstand (L) zwischen Werkzeug und Werkstück sind, und während der unter der Wirkung der benannten Wechselspannung ein ionisierter Kanal zwischen Werkzeug und Werkstück erzeugt wird,
b) eine Funkenphase ($t_A$), die mit der Erkennung eines Stromflusses zwischen Werkzeug und Werkstück beginnt und während der eine Gleichspannungsquelle (4) einen erosiven Entladungsstrom (14) aufbaut und aufrechterhält, und
c) eine Pausierphase ($t_B$), während der keinerlei Spannung zwischen Werkzeug (1) und Werkstück (2) angelegt ist, so dass das zwischen dem Werkzeug und dem Werkstück vorhandene Bearbeitungsfluid (3) entionisiert wird und der ionisierte Kanal verschwindet;

und **durch** die Tatsache, dass diese Folge von Phasen während der Bearbeitungsdauer wiederholt wird.

2. Verfahren gemäss Anspruch 1, **dadurch gekennzeichnet, dass** die Frequenz der benannten Wechselspannung in einem Arbeitsvolumen (G) mit einem Bearbeitungsabstand (L) von 20 bis 40 Mikrometern mindestens 100 kHz beträgt; dadurch, dass diese Frequenz erhöht wird, wenn sich der benannte Abstand verringert; und dadurch, dass diese Frequenz bei einem Abstand von im Wesentlichen 1 Mikrometer im Wesentlichen 10 MHz beträgt.

3. Verfahren gemäss Anspruch 1, **dadurch gekennzeichnet, dass** die Wechselspannungsfrequenz während der Wartezeit ($t_D$) veränderlich ist.

4. Verfahren gemäss Anspruch 1, **dadurch gekennzeichnet, dass** die Wechselspannungsfrequenz in Abhängigkeit von den Ionen festgelegt wird, die in dem Bearbeitungsfluid (3) enthalten sind und für die die oszillierenden Strecken gesteuert werden sollen.

5. Verfahren gemäss Anspruch 3, **dadurch gekennzeichnet, dass** sich die Wechselspannungsfrequenz innerhalb der Wartephase ($t_D$) fortlaufend verringert, so dass ein Frequenzspektrum überstrichen wird.

6. Verfahren gemäss Anspruch 1, **dadurch gekennzeichnet, dass** eine Wechselspannung so aufgebaut wird, dass die Dauer der negativen Impulse sich von der der positiven Impulse unterscheidet.

7. Verfahren gemäss Anspruch 1 oder 6, **dadurch gekennzeichnet, dass** eine Wechselspannung so aufgebaut wird, dass die Amplitude der negativen Impulse sich von der der positiven Impulse unterscheidet.

8. Verfahren gemäss Anspruch 6 oder 7, **dadurch gekennzeichnet, dass** eine Wechselspannung so aufgebaut wird, dass die mittlere Spannung der Entladungen entweder null oder positiv oder negativ ist.

9. Verfahren gemäss einem der vorangehenden Ansprüche, **dadurch gekennzeichnet, dass** die Wechselspannung bei der Polarität fixiert wird, die im Augenblick der Erkennung eines Stromes zwischen Werkzeug (1) und Werkstück (2) zufällig vorliegt.

10. Verfahren gemäss einem der Ansprüche 1 bis 8, **dadurch gekennzeichnet, dass** die Wechselspannung nach Erkennung eines Stromes zwischen Werkzeug (1) und Werkstück (2) bei einer vorbestimmten Polarität fixiert wird, und dadurch, dass die benannte, vorbestimmte Polarität bevorzugt jene ist, die der Polarität der Gleichspannungsquelle (4) entspricht.

11. Verfahren gemäss Anspruch 1, **dadurch gekennzeichnet, dass** die Funkenphase ($t_A$) in eine Verzögerungszeit ($t_R$), die der Dauer des Einschaltens der Hauptentladung durch die Gleichspannungsquelle entspricht, und eine Stromflusszeit ($t_C$), die der erosiven Entladung entspricht, unterteilt wird, und dadurch, dass die Dauer der benannten Verzögerungszeit ($t_R$) so gesteuert wird, dass für jede erosive Entladung mindestens eine volle Periode der Wechselspannung mit einem positiven Impuls und einem negativen Impuls erhalten wird.

12. Verfahren gemäss Anspruch 11, **dadurch gekennzeichnet, dass** die Verzögerungszeit ($t_R$) so gesteuert wird, dass

$$t_R \geq T - t_D$$

ist, wobei $t_R$ die Verzögerungszeit, T die Periode der Wechselspannung und $t_D$ die Dauer der Wartephase ist.

13. Verfahren gemäss Anspruch 11 oder 12, **dadurch gekennzeichnet, dass** die Verzögerungszeit ($t_R$) so gesteuert wird, dass sie einer Periode (T) der Wechselspannung gleich ist oder diese übersteigt.

14. Verfahren gemäss Anspruch 1, **dadurch gekennzeichnet, dass** eine vorbestimmte Zeit der Verzögerung ($t'_R$) zwischen der Wartephase ($t_D$) und der Funkenphase ($t_A$) eingeführt wird, indem eine vorbestimmte Wartezeit zwischen die Erkennung eines Stromes zwischen Werkzeug (1) und Werkstück (2) und das Einschalten der Gleichspannungsquelle (4) eingeschoben wird.

15. Vorrichtung für die Realisierung eines Verfahrens der Funkenerosionsbearbeitung, bei dem ein Werkstück (2) mittels eines Werkzeuges (1) bearbeitet wird, die voneinander durch einen Bearbeitungsabstand (L) eines mit einem Bearbeitungsfluid (3) gefüllten Arbeitsvolumens (G) getrennt sind, indem eine elektrische Spannung zwischen Werkzeug und Werkstück angelegt wird, **dadurch gekennzeichnet, dass** sie verknüpft umfasst:

   - eine Wechselspannungsquelle, so eingerichtet, dass sie während einer Wartephase ($t_D$) zwischen Werkzeug (1) und Werkstück (2) eine Wechselspannung mit einer solchen Frequenz erzeugt, dass die im Bearbeitungsfluid (3) enthaltenen Ionen (6, 7) oszillierende Strecken (P2) durchlaufen, die merklich kürzer als der Bearbeitungsabstand (L) sind, und dass ein ionisierter Kanal zwischen Werkstück und Werkzeug erzeugt wird,

- einen Fühler, der in der Lage ist, einen Strom zwischen Werkzeug und Werkstück zu erkennen,
- eine Gleichspannungsquelle (4), so eingerichtet, dass während einer Funkenphase ($t_A$), die mit der Erkennung eines Stromes zwischen Werkzeug und Werkstück beginnt, ein erosiver Entladungsstrom aufgebaut und aufrechterhalten wird, und
- eine Steuereinheit (32), so eingerichtet, dass die benannten Wechsel- und Gleichspannungsquellen so eingeschaltet werden, dass während der erosiven Entladungen eine Folge von Phasen erhalten wird, die die benannte Wartephase ($t_D$), die benannte Funkenphase ($t_A$) sowie eine Pausierphase ($t_B$), während der keinerlei Spannung zwischen Werkzeug und Werkstück angelegt wird, so dass das Bearbeitungsfluid (3) zwischen Werkzeug (1) und Werkstück (2) entionisiert wird und der ionisierte Kanal verschwindet, umfasst.

16. Vorrichtung gemäss Anspruch 15, **dadurch gekennzeichnet, dass** sie einen ersten Zweig (30) und einen zweiten Zweig (31) umfasst, die parallel zwischen Werkzeug (1) und Werkstück (2) geschaltet sind, wobei der erste Zweig (30) als Wechselspannungsgenerator (12) und der zweite Zweig als Gleichspannungsgenerator (4) dient und eine Gleichspannungsquelle (45) umfasst, deren Anschlussklemmen über zumindest einen Unterbrecher (46, 47) und über zumindest eine Diode (48, 49) mit dem Werkzeug (1) bzw. dem Werkstück (2) verbunden sind.

17. Vorrichtung gemäss Anspruch 16, **dadurch gekennzeichnet, dass** der erste Zweig (30) eine Spannungsquelle (34) umfasst, von der eine erste Anschlussklemme über eine erste Diode (36) und über einen ersten Unterbrecher (40) mit dem Werkzeug (1) sowie über eine zweite Diode (38) und einen zweiten Unterbrecher (42) mit dem Werkstück (2) und eine zweite Anschlussklemme über einen dritten Unterbrecher (43) und eine dritte Diode (39) mit dem Werkzeug (1) sowie über einen vierten Unterbrecher (41) und eine vierte Diode (37) mit dem Werkstück (2) verbunden ist, während die Steuereinheit (32) so eingerichtet ist, dass sie den ersten (40) und vierten (41) Unterbrecher schliesst und öffnet, und sodann den zweiten (42) und dritten (43) Unterbrecher öffnet und schliesst, um die benannte Wechselspannung zu erhalten.

18. Vorrichtung gemäss Anspruch 16, **dadurch ge-**

**kennzeichnet, dass** der erste Zweig zwischen Werkzeug (1) und Werkstück (2) parallel geschaltet zwei Gleichspannungsquellen (55, 56) umgekehrter Polaritäten umfasst, deren Spannungen regelbar sind, wobei die negative Anschlussklemme einer ersten Quelle (55) über einen ersten Unterbrecher (58) und eine Diode (60) mit dem Werkzeug (1) und die positive Anschlussklemme der zweiten Quelle (56) über einen zweiten Unterbrecher (61) mit dem Werkzeug (1) verbunden ist, während die Steuereinheit (21) so eingerichtet ist, dass sie die benannten Unterbrecher (58, 61) abwechselnd öffnet und schliesst.

19. Vorrichtung gemäss Anspruch 15, **dadurch gekennzeichnet, dass** sie dafür eingerichtet ist, den erosiven Entladungsstrom mit einer Verzögerungszeit ($t_R$) einzuschalten, die so vorbestimmt ist, dass für jede erosive Entladung mindestens eine volle Periode der Wechselspannung angelegt wird.

20. Vorrichtung gemäss Anspruch 19, **dadurch gekennzeichnet, dass** sie so eingerichtet ist, dass

$$t_R \geq T - t_D$$

ist, wobei $t_R$ die Dauer der Verzögerungszeit, T die Periode der Wechselspannung und $t_D$ die Dauer der Wartephase ist, und bevorzugt

$$t_R \geq T.$$

## Claims

1. Process for machining by electroerosion, according to which a piece is machined by means of a tool (1) separated from each other by a machining distance (L) of a working space (G) in which is located a machining fluid, by applying an electrical voltage between the tool and the piece to give rise to erosive discharges, **characterized by** the following succession of phases during an erosive discharge:

   a) a delay phase ($t_D$) during which an alternating voltage is applied between the tool (1) of the piece (2) at a frequency such that the ions present in the machining fluid (3) follow oscillating paths (P2) substantially shorter than said machining distance (L) separating the tool and the piece and during which an ionized path is created between the tool and the piece by the effect of said alternating voltage,
   b) a sparking phase ($t_A$) beginning with the detection of a current flowing between the tool and the piece and during which a source of continuous voltage (4) forms and maintains an erosive discharge current (14) and

c) a pause phase ($t_B$) during which no voltage is applied between the tool (1) arid the piece (2) so that the machining fluid (3) present between the tool and the piece deionizes and the ionized path disappears;

and by the fact that this succession of phases is repeated for the duration of machining.

2. Process according to claim 1, **characterized by** the fact that the frequency of said alternating voltage is at least 100 kHz for a working space (G) having a machining distance (L) of 20 to 40 microns; by the fact that this frequency is increased when said distance is decreased and by the fact that this frequency is substantially 10 MHz for a distance substantially equal to 1 micron.

3. Process according to claim 1, **characterized by** the fact that the frequency of the alternating voltage is variable during the delay time ($t_D$).

4. Process according to claim 1, **characterized by** the fact that the frequency of the alternating voltage is fixed as a function of the ions contained in the machining fluid (3) for which the oscillating paths are to be controlled.

5. Process according to claim 3, **characterized by** the fact that the frequency of the alternating voltage decreases progressively within the delay phase ($t_D$) so as to sweep a spectrum of frequencies.

6. Process according to claim 1, **characterized by** the fact that there is established an alternating voltage such that the duration of the negative pulses will be different from that of the positive pulses.

7. Process according to claim 1 or 6, **characterized by** the fact that there is established an alternating voltage such that the amplitude of the negative pulses will be different from that of the positive pulses.

8. Process according to claim 6 or 7, **characterized by** the fact that there is established an alternating voltage such that the mean voltage of the discharges will be zero, or positive, or negative.

9. Process according to any one of the preceding claims, **characterized by** the fact that the alternating voltage is blocked on the random polarity present at the moment of the detection of a current between the tool (1) and the piece (2).

10. Process according to one of claims 1 to 8, **characterized by** the fact that the alternating voltage is blocked at a predetermined polarity upon the detection of a current between the tool (1) and the piece (2) and by the fact that said predetermined polarity is preferably that which corresponds to the polarity of the continuous voltage source (4).

11. Process according to claim 1, **characterized by** the fact that the sparking phase ($t_A$) is subdivided into a lag time ($t_R$) corresponding to the duration of turning on the principal discharge by the continuous voltage source and a current time ($T_C$) corresponding to the erosive discharge, and by the fact that the duration of said lag time ($t_R$) is adjusted such that there is obtained for each erosive discharge at least one complete period of the alternating voltage comprising a positive pulse and a negative pulse.

12. Process according to claim 11, **characterized by** the fact that the lag time ($t_R$) is adjusted such that

$$t_R \geq T - t_D$$

in which

$t_R$ is the duration of the lag time,
T is the period of alternating voltage, and
$t_D$ is the duration of the delay phase.

13. Process according to claim 11 or 12, **characterized by** the fact that the lag time ($t_R$) is adjusted so as to be equal to or greater than a period (T) of alternating voltage.

14. Process according to claim 1, **characterized by** the fact that there is introduced a predetermined lag period ($t'_R$) between the delay phase ($t_D$) and the sparking phase ($t_A$) by interposing a predetermined delay period between the detection of a current between the tool (1) and the piece (2) and the turning on of the continuous voltage source (4).

15. Device to practice a machining process by electroerosion according to which a piece (2) is machined by means of a tool (1) they being separated from each other by a machining distance (L) in a working space (G) in which is located the machining fluid (3) by applying an electrical voltage between the tool and the piece, **characterized by** the fact that it comprises in combination

- an alternating voltage source arranged to produce, during a delay period ($t_D$) an alternating voltage between the tool (1) and the piece (2) at a frequency such that ions (6, 7) present in the machining fluid (3) follow oscillating paths (P2) substantially shorter than the machining distance (L) and that an ionized path is created between the tool and the piece,

- a detector adapted to detect a current between the tool and the piece,
- a continuous voltage source (4) arranged so as to form and maintain an erosive discharge current over a sparking phase ($t_A$) beginning with the detection of a current between the tool and the piece, and
- a control unit (32) arranged so as to turn on said alternating and continuous voltage sources so as to obtain during erosive discharges a series of phases comprising said delay phase ($t_D$), said sparking phase ($t_A$) and a pause phase ($t_B$) during which no voltage is applied between the tool and the piece so that the machining fluid (3) between the tool (1) and the piece (2) deionizes and that the ionized path disappears.

16. Device according to claim 15, **characterized by** the fact that it comprises a first branch (30) and a second branch (31) connected in parallel between the tool (1) and the piece (2), the first branch (30) serving as an alternating voltage generator (12) and the second branch serving as a continuous voltage generator (4) and comprising a continuous voltage source (45) whose terminals are connected to the tool (1), respectively to the piece (2) by means of at least one switch (46, 47) and at least one diode (48, 49).

17. Device according to claim 16, **characterized by** the fact that the first branch (30) comprises a voltage source (34) of which a first terminal is connected to the tool (1) by means of a first diode (36) and a first switch (40) and to the piece (2) by means of a second diode (38) and a second switch (42) and of which a second terminal is connected to the tool (1) by means of a third switch (43) and by a third diode (39) and to the piece (2) by means of a fourth switch (41) and a fourth diode (37) , the control unit (32) being arranged so as to close and open the first (40) and fourth (41) switches and then to open and close the second (42) and third (43) switches to obtain said alternating voltage.

18. Device according to claim 16, **characterized by** the fact that the first branch (30) comprises, connected in parallel between the tool (1) and the piece (2), two continuous voltage sources (55, 56) of reverse polarities and whose voltages are adjustable, the negative terminal of the first source (55) being connected to the tool (1) by means of a first switch (58) and a diode (60) , the positive terminal of the second source (56) being connected to the tool (1) by means of a second switch (61), the control unit (21) being arranged so as to open and close alternately said switches (58, 61).

19. Device according to claim 15, **characterized by** the fact that it is arranged to turn on the erosive discharge current with a predetermined lag time ($t_R$) such that there is obtained for each erosive discharge at least the application of a complete period of alternating current.

20. Device according to claim 19, **characterized by** the fact that it is arranged such that

$$t_R \geq T - t_D$$

where

$t_R$ is the duration of the lag time,
T is the period of the alternating voltage, and
$t_D$ is the duration of the delay phase,

preferably

$$t_R \geq T.$$

fig.1

fig.2A

fig.2B

fig.3A

fig.3B

fig.4A

fig.4B

fig.5A

fig.5B

18

fig.6A

fig.6B

fig.7A

fig.7B

fig.8A

fig.8B

fig.9A

fig.9B

fig.10A

fig.10B

fig.11

fig.12